# EUROPÄISCHE PATENTSCHRIFT

(11) **EP 3 782 808 B1**
(45) Veröffentlichungstag und Bekanntmachung des Hinweises auf die Patenterteilung: **28.06.2023**
(21) Anmeldenummer: 20185183.9
(22) Anmeldetag: 10.07.2020
(51) Int. Cl.: B32B 3/26, B32B 7/027, B32B 7/10, B32B 7/12, B32B 27/08, B32B 27/10, B32B 27/30, B32B 15/082

(54) **MEHRSCHICHTIGE FOLIE**
MULTILAYER FILM
FEUILLE MULTICOUCHE

(30) Priorität: 08.08.2019 DE 102019211893
(43) Veröffentlichungstag der Anmeldung: 24.02.2021
(73) Patentinhaber: Konrad Hornschuch AG, 74679 Weissbach (DE)
(72) Erfinder: Kanzler, Waldemar - c/o Continental AG, 30419 Hannover (DE); Mayer, Sabine - c/o Continental AG, 30419 Hannover (DE); Hügel, Thomas - c/o Continental AG, 30419 Hannover (DE); Nuber, Diane - c/o Continental AG, 30419 Hannover (DE)
(74) Vertreter: Continental Corporation

(56) Entgegenhaltungen:
- WO-A1-2018/091556
- DE-A1- 4 032 139
- US-A1- 2018 194 119

## Beschreibung

Die Erfindung betrifft eine mehrschichtige Folie, umfassend mindestens eine Dekorschicht auf Basis eines thermoplastischen Polymers und mindestens eine auf die mindestens eine Dekorschicht oberseitig aufgebrachte Schutzschicht und ein mit einer derartigen mehrschichtigen Folie bedecktes Formteil.

Derartige Folien sind bekannt und dienen beispielsweise der Beschichtung oder Kaschierung von Substraten zum Schutz vor Sonneneinstrahlung und anderen Witterungseinflüssen. So werden beispielsweise Oberflächen von Fassadenmaterialien, Fensterprofilen, Garagentoren, Balkonverkleidungen, Trennelementen und dergleichen mit derartigen Folien oberflächlich bedeckt. Die Folien sollen eine hohe Lebensdauer aufweisen und trotz Belastung durch Sonnenlicht, Temperatur, Wasser und andere Witterungseinflüsse ohne nennenswerte Verfärbung fest mit dem Substrat verbunden bleiben. Zum Stand der Technik wird beispielhaft auf die WO 2017/005681 A1 verwiesen.

Insbesondere im Bereich der Ausgestaltung von Fassadenmaterialien kommen vermehrt Schichtpressstoffe, sog. CPL (Continuous Pressure Laminate) und HPL (High Pressure Laminate) zur Anwendung. Insbesondere die sogenannten Kompakt-Schichtpressstoffe oder High Pressure Laminates (HPL) nach DIN EN 438-6 gewinnen zunehmend an Bedeutung. Die mechanischen Eigenschaften, breiten Verarbeitungsmöglichkeiten, die Designvielfalt sowie gute Witterungsbeständigkeit bei vergleichsweise moderatem Preis sind für diese Entwicklung maßgeblich.

Für die Oberflächengestaltung bzw. Veredelung derartiger HPL-Platten haben sich im Wesentlichen vier Technologien etabliert:
- Lackieren der Oberfläche in einem separaten Schritt;
- Folieren der Oberfläche in einem separaten Schritt;
- Verpressen von mit einer Schutzschicht beschichteten Dekorpapieren im Ein-Schritt-Verfahren, und
- Verpressen von Dekorpapier und einer PMMA -basierten Klarfolie als äußere Schutzschicht im Ein-Schritt-Verfahren. Die PMMA-Schicht kann dabei mit weiteren Schichten, wie z.B. einer PVDF-Schicht oder einem Beschichtungsmaterial abgedeckt werden.

Die beiden letztgenannten Verfahren dominieren den Markt aufgrund ihrer Ein-Schritt-Herstellung und der daraus resultierenden Wirtschaftlichkeit und Performance.

HPL-Platten werden diskontinuierlich in Mehretagenpressen mit einem Pressdruck von mindestens 5 MPa und Temperaturen oberhalb 120 °C hergestellt. Abhängig von der Plattendicke, Pressenbeschickung und der maximalen Temperatur dauert der komplette Prozesszyklus ca. 25 bis 100 Minuten. Der Aufbau der Platten kann symmetrisch, d.h. auf Vorder- und Rückseite mit gleichem Schichtaufbau oder unsymmetrisch ausgebildet sein. Problematisch bei den bislang hergestellten HPL-Platten ist jedoch eine nur begrenzte Witterungsbeständigkeit, eine hohe Wärmeaufnahme insbesondere bei dunklen Dekoroberflächen und dadurch beschleunigte Dekorverwitterung und Farbverblassung sowie hohe wärmebedingte Ausdehnung, die spezielle Halterungssysteme und definierte Spaltmaße insbesondere bei vorgehängten Fassadenverkleidungen erforderlich macht. Darüber hinaus kann aufgrund einer bislang unvermeidlichen Ausdünnung der Schutzschicht infolge des Pressvorganges und hoher Sprödigkeit von Dekorpapieren nur eine begrenzte Strukturtiefe oder Prägung in die Oberfläche eingebracht werden. Schließlich erfordert die Bereitstellung unterschiedlicher Dekorpapiere, Schutzfolien etc. aufgrund unterschiedlicher Hersteller einen erhöhten logistischen Aufwand.

Aufgabe der vorliegenden Erfindung ist die Ausgestaltung einer mehrschichtigen Folie, die insbesondere als Oberflächenfolie sowohl für die Dekorierung als auch den Schutz eines Substrats, insbesondere in Gestalt von HPL- oder CPL-Platten, mit herausragender Witterungsbeständigkeit, Feuchtebeständigkeit, infrarotreflektierenden Eigenschaften und leichter Verarbeitbarkeit Verwendung finden kann. Darüber hinaus soll die mehrschichtige Folie auch bei anderen Substraten, beispielsweise Kunststoffprofilen und -paneelen sowie Metallsubstraten und Substraten auf Basis von mineralischen Materialien, wie z.B. Zementfaserplatten oder Verbundmaterialien Anwendung finden.

Unter einem Substrat wird im Rahmen der vorliegenden Erfindung ein Formteil verstanden, welches je nach Dicke sowohl zu einer Folie als auch zu Platten verarbeitet werden kann und sowohl monolithisch als auch in Form eines Verbundmaterials vorliegen kann.

Zur Lösung der gestellten Aufgabe wird erfindungsgemäß eine mehrschichtige Folie gemäß den Merkmalen des Patentanspruchs 1 vorgeschlagen.

Vorteilhafte Ausgestaltungen und Weiterbildungen der Erfindung sind Gegenstand der abhängigen Ansprüche.

Die Erfindung schlägt vor, dass die auf die mindestens eine Dekorschicht aufgebrachte mindestens eine Schutzschicht eine Transmission im sichtbaren Wellenlängenbereich von mindestens 65 %, eine Transmission im Wellenlängenbereich der nahen Infrarotstrahlung von mindestens 55 % und eine Glasübergangstemperatur aufweist, die mindestens 10 % höher als die Glasübergangstemperatur der mindestens einen Dekorschicht ist, wobei im Falle mehrerer Schutzschichten die Schutzschicht mit der größten Dicke eine Glasübergangstemperatur aufweist, die mindestens 10 % höher als die Glasübergangstemperatur der mindestens einen Dekorschicht ist.

Im Rahmen der Erfindung wird unter dem sichtbaren Wellenlängenbereich ein Spektrum von etwa 400 bis 780 nm und unter dem Wellenlängenbereich der nahen Infrarotstrahlung ein Spektrum von etwa 700 bis 1300 nm verstanden.

Als thermoplastisches Polymer für die Ausbildung der mindestens einen Dekorschicht kommen Polyvinylchlorid (PVC), PVC-Copolymere, geeignete (Meth-)Acrylpolymere, (Meth-)Acryl-Copolymere sowie Abmischungen derselben in Betracht.

Das im Rahmen der Erfindung verwendete PVC-Polymer kann entweder weichmacherhaltig oder auch weichmacherfrei sein und durch Schlagzähmodifier und/oder weichmachende Polymere und/oder Copolymere modifiziert sein.

Innerhalb der Gesamtrezeptur der Dekorschicht der erfindungsgemäßen mehrschichtigen Folie stellt das verwendete thermoplastische Polymer die Komponente mit dem höchsten prozentualen Anteil an der Gesamtrezeptur dar.

Eine solche erfindungsgemäße mehrschichtige Folie bietet durch ihre transparente Schutzschicht im sichtbaren Wellenlängenbereich, unter dem die Erfindung den Bereich zwischen 400 nm und 780 nm versteht, eine gute Sichtbarkeit der unterhalb angeordneten mindestens einen Dekorschicht, die hinsichtlich Farbgebung und/oder Strukturierung zum Beispiel mittels Prägemustern und/oder entsprechenden Prägewerkzeugen in weiten Grenzen variiert werden kann.

Aufgrund der erfindungsgemäß darüber hinaus vorgesehenen Ausgestaltung der mindestens einen Schutzschicht mit einer um mindestens 10 % höheren Glasübergangstemperatur als die Glasübergangstemperatur der mindestens einen Dekorschicht kann insbesondere bei Verarbeitung der mehrschichtigen Folie in einem HPL-Pressprozess zur Herstellung von HPL-Platten die mindestens eine polymere transparente Schutzschicht ihre Schichtdicke im Wesentlichen beibehalten, da die Strukturen der eingesetzten Prägewerkzeuge von der unterhalb der mindestens einen Schutzschicht befindlichen mindestens einen Dekorschicht abgefangen werden. Somit wird die Schutzfunktion der mindestens einen transparenten Schutzschicht für die Dekorschicht(en) auch bei Verwendung der mehrschichtigen Folie zur Oberflächenbeschichtung einer HPL-Schichtpressstoffplatte nicht wesentlich verändert.

Darüber hinaus können auch relativ grob strukturierte Oberflächen, sogenannte 3-D Oberflächen mit einer Rauhtiefe R_{z} von über 100 µm erzeugt werden, ohne dass dabei Risse oder Beschädigungen insbesondere in der mindestens einen Dekorschicht und in der oberseitig aufgebrachten mindestens einen Schutzschicht entstehen. Strukturiert bedeutet in diesem Zusammenhang, dass die Mehrschichtfolie und/oder die äußerste Schicht des Substrats Vertiefungen, Ausbuchtungen, Unebenheiten etc. aufweist.

Nach einem Vorschlag der Erfindung wird die mindestens eine Schutzschicht auf Basis einer radikalisch härtenden und auf die mindestens eine Dekorschicht oberseitig aufgebrachten Beschichtung gebildet, wobei weiter bevorzugt eine solche Beschichtung auf Basis einer UV-strahlungshärtenden Lackbeschichtung vorgesehen ist. Selbstverständlich können auch andere radikalisch härtenden Beschichtungen vorgesehen sein, beispielsweise mittels Elektronenstrahlen ausgehärtete Lackbeschichtungen.

Mindestens eine Schutzschicht der erfindungsgemäßen mehrschichtigen Folie kann nach einem Vorschlag der Erfindung auf Basis einer Folienschicht aus Polymethylmethacrylat (PMMA) gebildet sein, die insbesondere extrudiert werden kann. Eine solche Folienschicht zur Ausbildung mindestens einer Schutzschicht bewirkt in Kombination mit der mindestens einen Dekorschicht eine besonders hohe Witterungsbeständigkeit.

Eine solche Schutzschicht auf Basis einer Folienschicht aus PMMA kann darüber hinaus bei Bedarf zusätzlich zur Steigerung der Chemikalien- und Witterungsbeständigkeit mit Polyvinylidenfluorid (PVDF) oder anderen fluorierten Polymeren, wie z.B. Polytetrafluorethylen, Polyfluorethylenvinylether, Polyvinylflourid kombiniert werden, etwa in Form einer Beimischung entsprechender Anteile in die PMMA-Basisrezeptur oder aber es wird zusätzlich zu der Schutzschicht auf Basis einer Folienschicht aus PMMA eine weitere Schutzschicht auf Basis einer Folienschicht aus PVDF oder anderen fluorierten Polymeren vorgesehen, die beispielsweise mit der PMMA-Folienschicht kalandriert, laminiert oder auch coextrudiert werden kann.

Die Gesamtdicke der mindestens einen Schutzschicht beträgt nach einem Vorschlag der Erfindung etwa 5-150 µm, je nach Rohstoffauswahl und Anzahl der kombinierten Schutzschichten. Vorzugsweise beträgt die Gesamtdicke etwa 10 bis 120 µm, weiter bevorzugt 15 bis 100 µm.

Im Rahmen der Erfindung ist insbesondere bevorzugt, entweder lediglich eine Schutzschicht vorzusehen, die dann vorzugsweise auf Basis einer radikalisch härtenden Beschichtung oder auf Basis einer PMMA-Folienschicht gebildet ist. Alternativ wird insbesondere die Kombination einer radikalisch härtenden Beschichtung mit einer weiteren Schutzschicht auf Basis einer PMMA-Folienschicht oder die Kombination von PMMA und PVDF in mindestens einer oder zwei aufeinandergefügten Folienschichten für geeignet angesehen.

Nach einem weiteren Vorschlag der Erfindung wird die mindestens eine Dekorschicht durch Auswahl und Zugabe entsprechender Additive und/oder Pigmente, Farbstoffe und/oder Füllstoffe infrarotreflektierend ausgerüstet, wodurch insbesondere einer übermäßigen Erwärmung bei Sonneneinstrahlung und Einfärbung in dunkleren Farbtönen entgegengewirkt wird. Es hat sich im Rahmen der Erfindung gezeigt, dass durch diese Maßnahmen eine Aufheizung auf Temperaturen unterhalb 70 °C begrenzt werden kann.

Zur weiteren Steigerung der infrarotreflektierenden Ausrüstung kann zusätzlich auf die mindestens eine Dekorschicht benachbart zu oberseitig aufgebrachten mindestens einen Schutzschicht eine weitere, vorzugsweise infrarotreflektierende Druckschicht aus einer entsprechenden Druckfarbe aufweisen. Die Druckschicht liegt zwischen der Dekorschicht und der darauf befindlichen Schutzschicht. Es ist auch möglich, die entsprechende Unterseite der Schutzschicht mit einer solchen Druckschicht zu versehen. In jedem Fall kann eine solche Kombination eine Gesamtdicke der Dekor- und Druckschicht(en) von etwa 50 bis 300 µm, bevorzugt 70 bis 250 µm, weiter bevorzugt 90 bis 220 µm und insbesondere 70 bis 200 µm aufweisen.

Nach einem weiteren Vorschlag der Erfindung wird die mindestens eine Dekorschicht dreidimensional geprägt, beispielsweise mit einem an eine Holzoberfläche mit charakteristischen Poren erinnernden Dekor. Es kann auch vorgesehen sein, die erfindungsgemäße Mehrschichtfolie in Gänze dreidimensional zu prägen, d.h. einschließlich der mindestens einen Schutzschicht. Üblicherweise werden alle Schichten der Mehrschichtfolie durch Prägung verändert. Jedoch ist die Ausprägung der Struktur in den einzelnen Schichten unterschiedlich. Die feine Struktur wird auf die Schutzschicht übertragen, damit kann der Glanz eingestellt werden. Die grobe Struktur wird von Dekorschicht(en) aufgenommen.

Darüber hinaus kann die mindestens eine Dekorschicht vorzugsweise Lichtschutzmittel aus der Klasse von 2-Hydroxyphenyl-Benzophenon (BP), 2-(2-Hydroxyphenyl)-Benzotriazol (BTZ), 2-Hydroxyphenyl-s-Triazin (HPT), Tetramethyl-Piperidin-Derivate (TPD), sterisch gehinderte Phenole (SGP), Phosphite, Thioether enthalten, die aufgrund der erfindungsgemäß vorgesehenen Abstufung der Glasübergangstemperatur zwischen der mindestens einen Dekorschicht und der mindestens einen Schutzschicht unter der Einwirkung von Zeit und Wärme den verbrauchten UV-Schutz der mindestens einen Schutzschicht kompensieren, sodass die Schutzwirkung der mindestens einen Schutzschicht auch unter extremen Klimabedingungen für einen deutlich längeren Zeitraum erhalten bleibt bzw. verlängert wird.

Beispiele der verwendeten Lichtschutzmittel sind in der nachfolgenden Tabelle 1 aufgeführt.

**Tabelle 1:**

| | Chemische Klasse | Produktbeispiele |
|---|---|---|
| UV Absorber | BP | Chimassorb^{®} 81 |
| | BTZ | Tinuvin^{®} 928 |
| | HPT | Tinuvin^{®} 460 |
| | | Tinuvin^{®} 1577 ED |
| Sterisch gehinderte Amine (HALS) | TPD | Tinuvin^{®} 152 |
| Antioxidantien) | SGP | Irganox^{®} 1010 |
| | Phosphite | Irgafos^{®} 168 |
| | Thioether | Irganox^{®} PS 802 |

### Besonders bevorzugt sind die Kombinationen von chemischen Verbindungen aus der Klasse BP/HPT/TPD; BP/BTZ/HPT/TPD

Da die erfindungsgemäße mehrschichtige Folie insbesondere zur Beschichtung von Substraten vorgesehen ist, die unterhalb der mindestens einen Dekorschicht platziert werden, sodass die mindestens eine Schutzschicht die spätere Oberfläche des solchermaßen beschichteten Substrates ausbildet, wird nach einem weiteren Vorschlag der Erfindung vorgesehen, dass die mindestens eine Dekorschicht haftvermittelnde Polymere auf Basis von Polyvinylchlorid und/oder Polyvinylacetat sowie Copolymeren aus Vinylchlorid und Vinylacetat funktionalisiert mit freien COOH und/oder OH Gruppen enthält. Diese haftvermittelnden Polymere können in die Rezeptur der unterseitigen und insoweit dem zu beschichteten Substrat benachbarten Dekorschicht eingearbeitet werden.

Sofern eine weiter gesteigerte Haftung erforderlich oder gewünscht ist, kann unterhalb der mindestens einen Dekorschicht und insoweit benachbart zum zu beschichtenden Substrat eine dünne Primerschicht vorgesehen werden, die für eine besonders hohe Anfangs- und Langzeithaftung (Schälhaftung in Anlehnung an DIN EN ISO 17271) auf der Substratoberfläche, beispielsweise einer HPL-Melaminharz-Oberfläche sorgt.

Entgegen den aus dem Stand der Technik herrschenden Annahmen wurde überraschenderweise festgestellt, dass die Haftung der Mehrschichtfolie unter Einfluss der Feuchte/Temperatur im Vergleich zum Ausgangszustand weiter zunimmt. So zeigen entsprechende Proben nach 6 Wochen Lagerungsprüfung bei 75°C und 97% rel. Feuchte einen durchschnittlichen Anstieg des Haftungswertes von mindestens 15%. Auch in der künstlichen Bewitterung wurde dieser Effekt bestätigt. Hier steigt der Haftungswert bis ca. 5000h kontinuierlich um ca. 3% je 1000h Bewitterung (DIN ISO 4892-2, Verfahren A) und bleibt im Laufe der weiteren Bewitterung auf einem konstanten hohen Niveau.

Eine solche auch als Haftungsschicht bezeichnete unterste Schicht umfasst insbesondere in einem Polymer / einer Polymermischung chemisch angebundene freie Carboxyl- und Hydroxylgruppen, die mit dem Melamin- und/oder Phenolharzen der als Substrat dienenden HPL-Schichtstoffplatte eine chemische Bindung eingehen. Eine solche Haftungsschicht kann eine Dicke von etwa 0,1 bis 20 µm, bevorzugt 0,5 bis 10 µm und besonders bevorzugt 1,0 bis 5,0 µm aufweisen. Dabei ist es vorteilhaft, dass ein Polymer die freien COOH-Gruppen und mindestens ein weiteres Polymer die freien OH-Gruppen enthält. In Abhängigkeit der Rezeptur von Melamin- und/oder Phenolharzbeschichtung sowie HPL Herstellbedingungen (Temperatur und Zeit) kann ein optimales COOH/OH Verhältnis eingestellt werden, um besonders hohe Anfangs- und Langzeithaftung zu erhalten. Dies gilt ebenso für den Fall, dass die haftvermittelnde Polymere in die mindestens eine Dekorschicht eingearbeitet werden.

Ein Vorschlag der Erfindung sieht vor, dass zwei Dekorschichten aufeinanderfolgend vorgesehen sind, von denen mindestens eine auf Basis von PVC gebildet ist, wobei die der mindestens einen Schutzschicht abgewandte unterseitige Dekorschicht eine Dicke von 20 bis 160 µm, bevorzugt 40 bis 120 µm, besonders bevorzugt 60 bis 100 µm aufweist und infrarotreflektierend mit einem TSR (Total Solar Reflectance gemäßASTM G173) von mindestens 70% ausgerüstet ist. Es hat sich im Rahmen der Erfindung gezeigt, dass durch diese Maßnahmen eine Aufheizung von dunklen Dekoren auf Temperaturen unterhalb 70 °C begrenzt werden kann. Die Untersuchung wurde durchgeführt an einem schwarz dekorierten HPL-Muster mit einem Farbort von L*=26, a*= -0,05, b*= -1,16.

Beispielsweise wird eine Dekorschicht auf Basis von PVC und eine weitere Dekor-Druckschicht auf Basis von Acrylaten, Polyvinylchlorid, Polyvinylacetat und/oder deren Mischungen und/oder Copolymerisaten gebildet.

Anstelle oder unterhalb der unterseitigen Dekorschicht kann auch eine metallische oder metallisierte Reflexionsschicht angeordnet werden, die in höchstem Maße IR-reflektierend ist.

Die Erfindung umfasst des Weiteren auch die Verwendung einer mehrschichtigen Folie wie vorangehend erläutert als Oberflächenbeschichtung mindestens einer Oberfläche von Platten aus Schichtpressstoffen, beispielsweise die bereits genannten HPL-Schichtpressstoffplatten für Anwendungen im Fassadenbau oder auch als Oberflächenbeschichtung von Platten aus Holzwerkstoffen, Metallen oder Kunststoffen oder mineralbasierten Platten sowie als Oberflächenbeschichtung von Holz-, Metall- oder Kunststoffprofilen oder Kombinationen derselben, beispielsweise zur Ausbildung von Fenstern, Garagentoren und dergleichen.

Darüber hinaus umfasst die Erfindung auch eine solche Schichtpressstoffplatte, Metallplatte, Zementfaserplatte, Holzplatte, ein Fensterprofil oder ein Garagentorpaneel, welche mit einer solchen oberflächlich aufgebrachten mehrschichtigen Folie ausgerüstet sind.

Die Erfindung wird nachfolgend anhand von Ausführungsbeispielen in weiteren Details erläutert. Es zeigen:
Figur 1 einen Schnitt durch eine erste Ausführungsform der Erfindung;
Figur 2einen Schnitt durch eine zweite Ausführungsform der Erfindung.

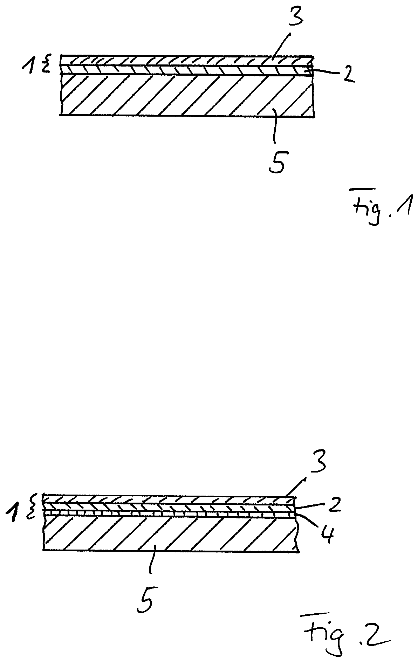

Aus der Figur 1 ist in einer stark vereinfachten, vergrößerten und schematischen Darstellung eine Fassadenplatte ersichtlich, wie sie beispielhaft zur Erstellung einer Fassadenverkleidung verwendet werden kann. Unterseitige Basis bildet eine an sich bekannte HPL-Schichtstoffplatte 5, die im Bereich ihrer der Witterung ausgesetzten Sichtseite mit einer mehrschichtigen Folie 1 beschichtet ist.

Die mehrschichtige Folie ist im dargestellten Ausführungsbeispiel zweischichtig ausgebildet und umfasst angrenzend an die Schichtstoffplatte 5 eine Dekorschicht 2, die in gewünschter Weise eingefärbt und/oder mit einem Prägemuster versehen werden kann und eine auf die Dekorschicht 2 oberseitig und vollflächig aufgebrachte Schutzschicht 3, welche zugleich die sichtbare Oberfläche der Fassadenplatte bildet.

Die Schutzschicht 3 ist beispielsweise aus einer Folienschicht auf Basis von Polymethylmethacrylat (PMMA) oder auf Basis einer radikalisch härtenden und auf die mindestens eine Dekorschicht 2 oberseitig aufgebrachten Beschichtung insbesondere in Form einer strahlungshärtenden Lackbeschichtung ausgebildet. Die Schutzschicht 3 ist in einer Gesamtdicke von etwa 20-120 µm ausgeführt und ist im sichtbaren Wellenlängenbereich zwischen 400 nm und 780 nm zu mindestens 65 % transparent, sodass die darunter befindliche Dekorschicht 2 durch die Schutzschicht 3 hindurch sichtbar ist.

Die insoweit von der transparenten Schutzschicht 3 abgedeckte Dekorschicht 2 ist aus einem beispielsweise weichmacherhaltigen PVC gebildet und durch geeignete Additivierung und Pigmentierung infrarotreflektierend ausgerüstet, sodass Infrarotstrahlungsanteile im Sonnenlicht wirksam von der darunter befindlichen Schichtstoffplatte 5 abgehalten werden, was insoweit vor einer unerwünscht hohen Erwärmung schützt.

Zur Sicherstellung einer guten Haftung an der Schichtstoffplatte 5 sind in die Dekorschicht 2 darüber hinaus haftungsvermittelnde Polymere auf Basis von Polyvinylchlorid und/oder Polyvinylacetat oder Copolymerisaten aus Vinylchlorid und Vinylacetat funktionalisiert mit freien COOH und/oder OH Gruppen eingearbeitet, die eine genügende Anzahl an freien funktionalen COOH/OH-Gruppen bereitstellen, welche mit der Schichtstoffplatte 5 eine chemische Bindung und damit gute Langzeithaftung eingehen. Unter einer solchen guten Haftung wird beispielsweise die Erzielung einer Schälhaftung in Anlehnung an DIN EN ISO 17271 >30N/20mm verstanden. Diese Haftung ist nach 6 Wochen Lagerungsprüfung bei 75 °C und 97 % rel. Feuchte vergleichbar gut.

Wesentliches Merkmal der eingesetzten mehrschichtigen Folie 1 ist es, dass die Schutzschicht 3 aufgrund der Rohstoffauswahl eine Glasübergangstemperatur Tg aufweist, die mindestens 10 % höher als die Glasübergangstemperatur der Dekorschicht 2 ist. Dies hat zur Folge, dass trotz einer in der Dekorschicht 2 vorliegenden Prägung und/oder einer Oberflächenstrukturierung der als Basis dienenden Schichtstoffplatte 5 die Schutzschicht 3 beim Erzeugen der Fassadenplatte ihre Dicke im Wesentlichen unverändert beibehält, da die dreidimensionalen Strukturen von der demgegenüber leichter verformbaren Dekorschicht 2 abgefangen werden. Im Gegensatz zum Stand der Technik tritt damit bei der erfindungsgemäßen mehrschichtigen Folie 1 keine wesentliche bzw. kritische Ausdünnung infolge der dreidimensionalen Strukturierung einhergehend mit Verlust an Schutzwirkung ein.

Aus der Figur 2 ist eine gegenüber dem Ausführungsbeispiel gemäß Figur 1 abgewandelte Ausgestaltung ersichtlich, die sich im Wesentlichen dadurch unterscheidet, dass unterhalb der Dekorschicht 2 zur Erhöhung der Haftung mit der Schichtstoffplatte 5 eine weitere diskrete Haftungsschicht 4 vorgesehen ist, die entweder als Folie auflaminiert oder als Beschichtung mit gängigen Verfahren aufgebracht, zum Beispiel aufgedruckt oder im Transferverfahren transferiert werden kann. Diese Haftungsschicht 4 sorgt für eine besonders hohe Anfangs- und Langzeithaftung zur Schichtstoffplatte 5, insbesondere im Falle der Ausbildung der Schichtstoffplatte 5 als HPL-Schichtstoffplatte. Dazu umfasst die Haftungsschicht eine große Zahl freier Carboxyl- und Hydroxylgruppen, die mit den funktionellen Gruppen der Melamin- und/oder Phenolharze der beharzten Papiere der HPL-Schichtstoffplatte 5 eine dauerfeste chemische Bindung eingehen. Dabei läuft die chemische Reaktion mit einem Melaminharz naturgemäß bei tieferen Temperaturen und schneller als mit Phenolharzen ab.

Sowohl im Ausführungsbeispiel gemäß Figur 1 als auch im Ausführungsbeispiel gemäß Figur 2 kann die Dekorschicht 2 darüber hinaus in an sich bekannter Weise Lichtschutzmittel aus der Klasse von 2-hydroxyphenyl-benzophenon (BP), 2-(2-hydroxyphenyl)-benzotriazol (BTZ), 2-hydroxyphenyl-s-triazin (HPT), Tetramethyl-Piperidin-Derivate (TPD), sterisch gehinderte Phenole (SGP), Phosphite, Thioether enthalten, siehe auch Tabelle 1, die jedoch aufgrund der erfindungsgemäß vorgesehenen höheren Glasübergangstemperatur in der Schutzschicht 3 allmählich und insbesondere unter der Einwirkung der aus der Sonnenbestrahlung resultierenden Wärme allmählich in die Schutzschicht 3 aufgenommen werden und insoweit für eine wesentlich verlängerte Lebensdauer und Schutzwirkung der Schutzschicht 3 gegen Umwelteinflüsse sorgen.

### Beispiel:

Zum Vergleich der Witterungsbeständigkeit wurde eine für Fassadenanwendungen geeignete HPL-Schichtstoffplatte in der Farbstellung dunkelgrau nach dem Stand der Technik durch Einsatz eines mit Melaminharz imprägnierten Dekorpapiers in anthrazitgrau sowie eines mit Phenolharz imprägnierten Kernpapiers und einer Witterungsschutzschicht aus einer transparenten Folie auf Basis von PMMA mit einer Glasübergangstemperatur von 93 °C als Vergleichsbeispiel hergestellt und einer erfindungsgemäßen Ausgestaltung gegenübergestellt, die aus einer HPL-Schichtstoffplatte mit einer äußeren Schicht aus Melaminharzpapier (imprägniert) und Kernpapier, imprägniert mit Phenolharz bestand, welche mit einer mehrschichtigen Folie, gebildet aus Schutzschicht, Dekorschicht und Haftschicht gemäß der Erfindung in der Farbstellung anthrazitgrau beschichtet war.

Sowohl das Vergleichsbeispiel als auch das erfindungsgemäße Beispiel wurden gleichermaßen bewittert, in dem nach DIN ISO 4892-2 folgende Betriebsbedingungen eingehalten wurden:
- Bestrahlungsstärke im Wellenlängenbereich von 300 nm bis 400 nm: (60 ± 3) W/m² oder bei einer Wellenlänge von 340 nm: (0,5 ± 0,03) W/m²;
- kontinuierliche Bestrahlung aus der Lichtquelle;
- Schwarzstandard-Temperatur: (65 ± 3) °C
- relative Luftfeuchte: (65 ± 10) %;
- Sprühzyklus: Sprühdauer (18 ± 0,5) min; Sprühpause: (102 ± 0,5) min.

Dabei zeigte das erfindungsgemäße Beispiel gemäß den in der nachfolgenden Tabelle 2 enthaltenen Ergebnissen eine wesentlich höhere Witterungsbeständigkeit, da keine ausgedünnten Stellen in der Schutzschicht vorhanden waren, die den Witterungsschutz für die nicht witterungsbeständigen Melamin- und Phenolharze schwächten.

Darüber hinaus bewirkte die Aufnahme des Lichtschutzmittels in die Schutzschicht aus dem Lichtschutzmittel-Vorrat der Dekorschicht in die Schutzschicht bei dem erfindungsgemäßen Beispiel einen deutlich verlängerten Lichtschutz gegenüber dem Vergleichsbeispiel.

**Tabelle 2:**

| | 5.000 h | 10.000 h | 15.000 h |
|---|---|---|---|
| Beispiel | GM=4-5 | GM=4-5 | GM=4 |
| Vergleichsbeispiel | GM=4-5 | GM=3-4 | GM=2-3 |

| | | | |
|---|---|---|---|
| GM = Graumaßstab nach EN 20105-A02 | | | |

Neben der vorangehend dargelegten Funktion als Schutzfolie für HPL-Schichtstoffplatten eignet sich die erfindungsgemäße Folie auch zur Beschichtung anderer Substrate/Formteile, wie Fensterprofilen und Garagentorpaneelen sowie zur Beschichtung von Metalloberflächen und mineralbasierten Substraten, wie z.B. Zementfaserplatten.

## Patentansprüche

1. Mehrschichtige Folie (1), umfassend mindestens eine Dekorschicht (2) auf Basis eines thermoplastischen Polymers und mindestens eine auf die mindestens eine Dekorschicht (2) oberseitig aufgebrachte Schutzschicht (3), die eine Transmission im sichtbaren Wellenlängenbereich mit einem Spektrum von etwa 400 bis 780 nm von mindestens 65 %, eine Transmission im Wellenlängenbereich der nahen Infrarotstrahlung mit einem Spektrum von etwa 700 bis 1300 nm von mindestens 55 % und eine Glasübergangstemperatur aufweist, die mindestens 10 % höher als die Glasübergangstemperatur der mindestens einen Dekorschicht (2) ist.

2. Mehrschichtige Folie (1) nach Anspruch 1, **dadurch gekennzeichnet, dass** das thermoplastische Polymer der mindestens einen Dekorschicht (2) ausgewählt ist aus Polyvinylchlorid oder (Meth-)Acrylpolymeren oder Abmischungen derselben.

3. Mehrschichtige Folie (1) nach Anspruch 1 oder 2, **dadurch gekennzeichnet, dass** mindestens eine Schutzschicht (3) auf Basis einer radikalisch härtenden und auf die mindestens eine Dekorschicht (2) oberseitig aufgebrachten Beschichtung gebildet ist.

4. Mehrschichtige Folie (1) nach einem der Ansprüche 1 bis 3, **dadurch gekennzeichnet, dass** mindestens eine Schutzschicht (3) auf Basis einer Folienschicht aus Polymethylmethacrylat (PMMA) gebildet ist.

5. Mehrschichtige Folie (1) nach Anspruch 4, **dadurch gekennzeichnet, dass** die Schutzschicht (3) auf Basis einer Folienschicht aus PMMA zusätzlich Polyvinylidenfluorid (PVDF) oder andere fluorierte Polymere enthält oder zusätzlich zu der Schutzschicht (3) auf Basis einer Folienschicht aus PMMA eine weitere Schutzschicht (3) auf Basis einer Folienschicht aus PVDF oder anderen fluorierten Polymeren vorgesehen ist.

6. Mehrschichtige Folie (1) nach einem der Ansprüche 1 bis 5, **dadurch gekennzeichnet, dass** die Gesamtdicke der mindestens einen Schutzschicht (3) 5 bis 150 µm beträgt.

7. Mehrschichtige Folie (1) nach einem der Ansprüche 1 bis 6, **dadurch gekennzeichnet, dass** die mindestens eine Dekorschicht (2) infrarotreflektierend ausgerüstet ist.

8. Mehrschichtige Folie (1) nach einem der Ansprüche 1 bis 7, **dadurch gekennzeichnet, dass** die mindestens eine Dekorschicht (2) dreidimensional geprägt ist.

9. Mehrschichtige Folie (1) nach einem der Ansprüche 1 bis 8, **dadurch gekennzeichnet, dass** die mindestens eine Dekorschicht (2) Lichtschutzmittel aus der Klasse von 2-hydroxyphenyl-benzophenon (BP), 2-(2-hydroxyphenyl)-benzotriazol (BTZ), 2-hydroxyphenyl-s-triazin (HPT), Tetramethyl-Piperidin-Derivate (TPD), sterisch gehinderte Phenole (SGP), Phosphite, und/oder Thioether enthält.

10. Mehrschichtige Folie (1) nach einem der Ansprüche 1 bis 9, **dadurch gekennzeichnet, dass** die mindestens eine Dekorschicht (2) haftvermittelnde Polymere auf Basis von Polyvinylchlorid und/oder Polyvinylacetat und/oder Copolymerisaten aus Vinylchlorid und Vinylacetat funktionalisiert mit freien COOH und/oder OH Gruppen enthält.

11. Mehrschichtige Folie (1) nach einem der Ansprüche 1 bis 10, **dadurch gekennzeichnet, dass** zwischen der mindestens einen Dekorschicht (2) benachbart zur oberseitig aufgebrachten mindestens einen Schutzschicht (2) eine Druckschicht vorgesehen ist.

12. Mehrschichtige Folie (1) nach einem der Ansprüche 1 bis 11, **dadurch gekennzeichnet, dass** zwei Dekorschichten (2) aufeinanderliegend vorgesehen sind, von denen mindestens eine auf Basis von PVC ausgebildet ist, wobei die der mindestens einen Schutzschicht (3) abgewandte unterseitige Dekorschicht (2) eine Dicke von 20 bis 160 µm aufweist und infrarotreflektierend mit einem TSR (Total Solar Reflectance gemäß ASTM G173) von mindestens 70% ausgerüstet ist.

13. Mehrschichtige Folie (1) nach Anspruch 12, **dadurch gekennzeichnet, dass** unterhalb der unterseitigen Dekorschicht eine metallische Reflektionsschicht vorgesehen ist oder die unterseitige Dekorschicht von einer metallischen Reflektionsschicht gebildet ist.

14. Verwendung einer mehrschichtigen Folie (1) gemäß einem der vorangehenden Ansprüche als Oberflächenbeschichtung von Platten und/oder Profilen aus Schichtpressstoffen, Holzwerkstoffen, Metallen, Kunststoffen und Kunststoffrezyklaten mit oder ohne Faserverstärkung oder mineralbasierten Werkstoffen und Kombinationen derselben.

15. Schichtpressstoffplatte, Metallplatte, Kunststoffplatte, Zementfaserplatte, Holzplatte, Fensterprofil, Türprofil, Fassadenelement, Trennelement, Verkleidungselement oder Garagentorpaneel mit einer oberflächlich aufgebrachten mehrschichtigen Folie (1) gemäß einem der Ansprüche 1 bis 14.

## Claims

1. Multilayer film (1) comprising at least one decorative layer (2) based on a thermoplastic polymer and at least one protective layer (3) applied to the upper surface of the at least one decorative layer (2) which exhibits a transmittance in the visible wavelength range comprising a spectrum of about 400 to 780 nm of at least 65%, a transmittance in the wavelength range of near-infrared radiation comprising a spectrum of about 700 to 1300 nm of at least 55% and a glass transition temperature which is at least 10% higher than a glass transition temperature of the at least one decorative layer (2) .

2. Multilayer film (1) according to Claim 1, **characterized in that** the thermoplastic polymer of the at least one decorative layer (2) is selected from polyvinyl chloride or (meth)acrylic polymers or blends thereof.

3. Multilayer film (1) according to Claim 1 or 2, **characterized in that** at least one protective layer (3) based on a free-radically curable coating applied to the upper surface of the at least one decorative layer (2) has been formed.

4. Multilayer film (1) according to any of Claims 1 to 3, **characterized in that** at least one protective layer (3) based on a film layer of polymethyl methacrylate (PMMA) has been formed.

5. Multilayer film (1) according to Claim 4, **characterized in that** the protective layer (3) based on a film layer of PMMA additionally contains polyvinylidene fluoride (PVDF) or other fluorinated polymers or in addition to the protective layer (3) based on a film layer of PMMA a further protective layer (3) based on a film layer of PVDF or other fluorinated polymers has been provided.

6. Multilayer film (1) according to any of Claims 1 to 5, **characterized in that** the total thickness of the at least one protective layer (3) is 5 to 150 µm.

7. Multilayer film (1) according to any of Claims 1 to 6, **characterized in that** the at least one decorative layer (2) has been provided with infrared reflectivity.

8. Multilayer film (1) according to any of Claims 1 to 7, **characterized in that** the at least one decorative layer (2) has been three-dimensionally embossed.

9. Multilayer film (1) according to any of Claims 1 to 8, **characterized in that** the at least one decorative layer (2) contains light stabilizers from the class of 2-hydroxyphenylbenzophenone (BP), 2-(2-hydroxyphenyl)benzotriazole (BTZ), 2-hydroxyphenyl-s-triazine (HPT), tetramethylpiperidine derivatives (TPD), sterically hindered phenols (SHP), phosphites, and/or thioethers.

10. Multilayer film (1) according to any of Claims 1 to 9, **characterized in that** the at least one decorative layer (2) contains adhesion-promoting polymers based on polyvinyl chloride and/or polyvinyl acetate and/or copolymers of vinyl chloride and vinyl acetate functionalized with free COOH and/or OH groups.

11. Multilayer film (1) according to any of Claims 1 to 10, **characterized in that** a printed layer has been provided between the at least one decorative layer (2) and the at least one protective layer (2) applied adjacently to the upper surface thereof.

12. Multilayer film (1) according to any of Claims 1 to 11, **characterized in that** two decorative layers (2) have been provided one atop the other, at least one of which is based on PVC, wherein the lower decorative layer (2) facing away from the at least one protective layer (3) has a thickness of 20 to 160 µm and has been been provided with infrared reflectivity with a TSR (total surface reflectance according to ASTM G173) of at least 70%.

13. Multilayer film (1) according to Claim 12, **characterized in that** a metallic reflective layer has been provided below the lower decorative layer or the lower decorative layer has been formed by a metallic reflection layer.

14. Use of a multilayer film (1) according to any of the preceding claims as a surface coating of sheets and/or profiles composed of high-pressure laminates, wood-based materials, metals, plastics and plastics recyclates with or without fiber reinforcement or mineral-based materials and combinations thereof.

15. High-pressure laminate sheet, metal sheet, plastics sheet, fiber cement sheet, wood sheet, window profile, door profile, façade element, separating element, cladding element or garage door panel having a surficially applied multilayer film (1) according to any of Claims 1 to 14.

## Revendications

1. Feuille multicouche (1) comprenant au moins une couche décorative (2) à base d'un polymère thermoplastique et au moins une couche de protection (3) appliquée sur la face supérieure de ladite au moins une couche décorative (2), laquelle couche de protection présente une transmission dans la plage des longueurs d'onde visibles d'un spectre d'environ 400 à 780 nm d'au moins 65%, une transmission dans la plage de longueurs d'onde du rayonnement infrarouge proche d'un spectre d'environ 700 à 1300 nm d'au moins 55% et une température de transition vitreuse qui est supérieure d'au moins 10% à la température de transition vitreuse de ladite au moins une couche décorative (2).

2. Feuille multicouche (1) selon la revendication 1, **caractérisée en ce que** le polymère thermoplastique de ladite au moins une couche décorative (2) est choisi parmi le poly(chlorure de vinyle) ou les polymères de (méth)acryle ou leurs mélanges.

3. Feuille multicouche (1) selon la revendication 1 ou 2, **caractérisée en ce qu'**au moins une couche de protection (3) est formée à base d'un revêtement durcissant par voie radicalaire et sur le revêtement appliqué sur la face supérieure de ladite au moins une couche décorative (2).

4. Feuille multicouche (1) selon l'une quelconque des revendications 1 à 3, **caractérisée en ce qu'**au moins une couche de protection (3) est formée à base d'une couche de feuille en poly(méthacrylate de méthyle) (PMMA).

5. Feuille multicouche (1) selon la revendication 4, **caractérisée en ce que** la couche de protection (3) à base d'une couche de feuille en PMMA contient en plus du poly(fluorure de vinylidène) (PVDF) ou d'autres polymères fluorés ou une autre couche de protection (3) à base d'une couche de feuille en PVDF ou en d'autres polymères fluorés est prévue en plus de la couche de protection (3) à base d'une couche de feuille en PMMA.

6. Feuille multicouche (1) selon l'une quelconque des revendications 1 à 5, **caractérisée en ce que** l'épaisseur totale de ladite au moins une couche de protection (3) est de 5 à 150 µm.

7. Feuille multicouche (1) selon l'une quelconque des revendications 1 à 6, **caractérisée en ce que** ladite au moins une couche décorative (2) est apprêtée de manière à réfléchir les infrarouges.

8. Feuille multicouche (1) selon l'une quelconque des revendications 1 à 7, **caractérisée en ce que** ladite au moins une couche décorative (2) est gaufrée en trois dimensions.

9. Feuille multicouche (1) selon l'une quelconque des revendications 1 à 8, **caractérisée en ce que** ladite au moins une couche décorative (2) contient des agents de protection contre la lumière de la classe formée par la 2-hydroxyphényl-benzophénone (BP), le 2-(2-hydroxyphényl)-benzotriazole (BTZ), la 2-hydroxyphényl-s-triazine (HPT), les dérivés de tétraméthylpipéridine (TPD), les phénols stériquement encombrés (SGP), les phosphites et/ou les thioéthers.

10. Feuille multicouche (1) selon l'une quelconque des revendications 1 à 9, **caractérisée en ce que** ladite au moins une couche décorative (2) contient des polymères promoteurs d'adhérence à base de poly(chlorure de vinyle) et/ou de poly(acétate de vinyle) et/ou des copolymères de chlorure de vinyle et d'acétate de vinyle fonctionnalisés par des groupes COOH et/ou OH libres.

11. Feuille multicouche (1) selon l'une quelconque des revendications 1 à 10, **caractérisée en ce qu'**au moins une couche imprimée est prévue entre ladite au moins une couche décorative (2) et ladite au moins une couche de protection (2) appliquée sur la face supérieure et à proximité de cette dernière.

12. Feuille multicouche (1) selon l'une quelconque des revendications 1 à 11, **caractérisée en ce que** deux couches décoratives (2) sont prévues de manière superposée, dont au moins l'une est formée à base de PVC, la couche décorative (2) inférieure opposée à ladite au moins une couche de protection (3) présentant une épaisseur de 20 à 160 µm et étant apprêtée de manière à réfléchir les infrarouges à un TSR (Total Solar Reflectance - facteur total de réflexion solaire selon la norme ASTM G173) d'au moins 70%.

13. Feuille multicouche (1) selon la revendication 12, **caractérisée en ce qu'**une couche de réflexion métallique est prévue sous la couche décorative inférieure ou la couche décorative inférieure est formée par une couche de réflexion métallique.

14. Utilisation d'une feuille multicouche (1) selon l'une quelconque des revendications précédentes comme revêtement de surface de panneaux et/ou de profilés en matériaux comprimés stratifiés, matériaux à base de bois, métaux, matériaux synthétiques et produits synthétiques recyclés présentant un renforcement fibreux ou non ou matériaux à base minérale ou en combinaisons de ceux-ci.

15. Panneau en matériau comprimé stratifié, panneau métallique, panneau en matériau synthétique, panneau en fibrociment, panneau en bois, profilé de fenêtre, profilé de porte, élément de façade, élément de séparation, élément d'habillement ou panneau de porte de garage comportant une feuille multicouche (1) selon l'une quelconque des revendications 1 à 14 appliquée en surface.
